# EUROPEAN PATENT SPECIFICATION

(11) **EP 2 988 125 B1**
(45) Date of publication and mention of the grant of the patent: **08.05.2019**
(21) Application number: 15154758.5
(22) Date of filing: 04.03.2002
(51) Int. Cl.: G01N 30/34, B01D 15/38, A61K 38/44, A61K 31/555, B01D 15/32, G01N 30/02, B01D 15/42, G01N 30/88

(54) **MANGANESE(II) PENTAAZACYCLOALKANE COMPLEXES**
MANGAN(II) PENTAAZACYCLOALKANE KOMPLEXE
COMPLEXES DE MANGAN(II) PENTAAZACYCLOALKANE

(30) Priority: 02.03.2001 US 273220 P
(43) Date of publication of application: 24.02.2016
(62) Divisional of application: 02721239.8
(73) Proprietor: Galera Labs, LLC, Creve Coeur, Missouri 63132 (US)
(72) Inventor: Slomczynska, Urszula, J, St. Louis, MO 63108 (US); Trawick, Bobby, N, St. Louis, MO 63108 (US); Riley, Denis, P., St. Louis, MO 63108 (US); Naik, Arati, St. Louis, MO 63108 (US)
(74) Representative: Forrest, Stuart

(56) References cited:
- WO-A1-96/39396
- WO-A1-97/06830
- US-A- 5 610 293
- SALVEMINI D ET AL: "A NONPEPTIDYL MIMIC OF SUPEROXIDE DISMUTASE WITH THERAPEUTIC ACTIVITY IN RATS", SCIENCE, AMERICAN ASSOCIATION FOR THE ADVANCEMENT OF SCIENCE, US, vol. 286, 8 October 1999 (1999-10-08), pages 304-306, XP000971099, ISSN: 0036-8075, DOI: 10.1126/SCIENCE.286.5438.304
- RILEY DENNIS P: "Functional Mimics of Superoxide Dismutase Enzymes as Therapeutic Agents", CHEMICAL REVIEW, vol. 99, no. 9, 27 July 1999 (1999-07-27), pages 2573-2587, XP002630721, AMERICAN CHEMICAL SOCIETY

## Description

### FIELD OF THE INVENTION

This invention relates to a superoxide dismutase (SOD) mimetic metal complex.

### BACKGROUND OF THE INVENTION

Superoxide dismutase (SOD) enzymes are enzymes that catalyze the dismutation of the free radical superoxide, the one-electron reduction product of molecular oxygen. The dismutation of the free radical superoxide involves the conversion of this one-electron reduction product of molecular oxygen to the nonradical molecular oxygen. Superoxide dismutase enzymes are a class of oxidoreductases which contain either Cu/Zn, Fe, or Mn at the active site. Superoxide dismutase (SOD) mimetic compounds are low molecular weight catalysts which mimic the natural enzyme function of the superoxide dismutase enzymes. Thus, superoxide dismutase mimetic compounds also catalyze the conversion of superoxide into oxygen and hydrogen peroxide, rapidly eliminating the harmful biologically generated superoxide species that are believed to contribute to tissue pathology in a number of diseases and disorders. These diseases and disorders include reperfusion diseases, such as those following myocardial infarct or stroke, inflammatory disorders such as arthritis, and neurological disorders such as Parkinson's disease. Chem Reviews, 1999 vol 99, No. 9, 2573-2587*.*

Superoxide dismutase mimetic compounds possess several advantages over the superoxide dismutase enzymes themselves in that their chemical properties can be altered to enhance stability, activity and biodistribution while still possessing the ability to dismutase the harmful superoxide. Superoxide dismutase mimetic compounds have generated intense interest and have been the focus of considerable efforts to develop them as a therapeutic agent for the treatment of a wide range of diseases and disorders, including reperfusion injury, ischemic myocardium post-ischemic neuropathies, inflammation, organ transplantation and radiation induced injury. Most of the superoxide dismutase mimics currently being developed as therapeutic agents are synthetic low molecular weight manganese-based superoxide dismutase mimetic compounds. *Chem Reviews, 2576.*

Superoxide dismutase mimetic compounds are metal complexes in which the metal can coordinate axial ligands. Examples of such metal complexes include, but are not limited to, complexes of the metals Mn and Fe. Many of the complexes of the metals Mn and Fe do not possess superoxide dismutase activity but possess properties that enable them to be put to other therapeutic and diagnostic uses. These therapeutic and diagnostic uses include MRI imaging enhancement agents, peroxynitrite decomposition catalysts, and catalase mimics. These metal complexes, however, share the structural similarity of possessing a metal that can coordinate exchangeable ligands. These metal complexes exist in water as a mixture of species in which various ligands are possible. An illustration of such a mixture is provided by M40403, a Mn(II) complex of a nitrogen-containing fifteen membered macrocyclic ligand, shown in Scheme 1. One of the forms for this metal complex is the dichloro complex, which when dissolved in water another form is generated where one of the chloride anions immediately dissociates from the metal generating the [Mn(Cl)(aquo)]+ complex. The problem in aqueous solvent systems or any solvent which has a potential donor atom is that there are a variety of potential ligands available to coordinate axially to the Mn(II) ion of the complex. In conducting an analysis of a sample containing a metal complex by high performance liquid chromatography (HPLC) the chromatogram tends to be very broad and unresolved due to the presence of the various species of complexes, as shown in Scheme 1.

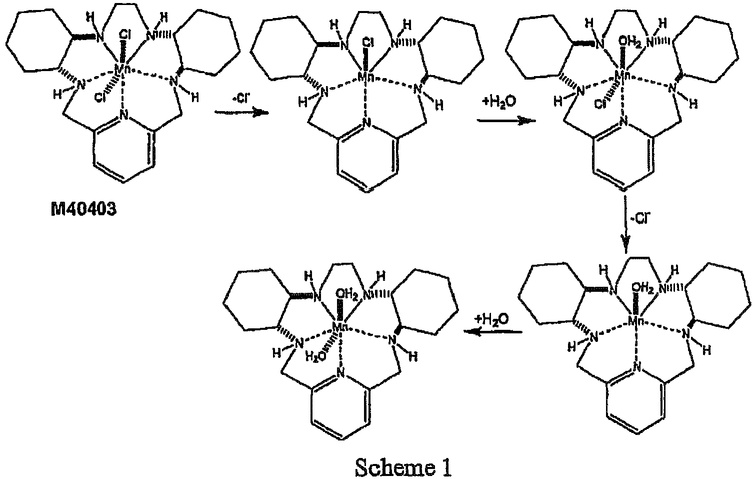

HPLC exploits the differences in affinity that a particular compound of interest has for the stationary phase and the mobile phase. This phenomenon can be utilized to separate compounds based on the differences in their physical properties. Thus, HPLC can be used to separate stereoisomers, diastereomers, enantiomers, mirror image stereoisomers, and impurities. Stereoisomers are those molecules which differ from each other only in the way their atoms are oriented in space. The particular arrangement of atoms that characterize a particular stereoisomer is known as its optical configuration, specified by known sequencing rules as, for example, either + or - (also D or L) and/or R or S. Stereoisomers are generally classified as two types, enantiomers or diastereomers. Enantiomers are stereoisomers which are mirror-images of each other. Enantiomers can be further classified as mirror-image stereoisomers that cannot be superimposed on each other and mirror-image stereoisomers that can be superimposed on each other. Mirror-image stereoisomers that can be superimposed on each other are known as meso compounds. Diastereomers are stereoisomers that are not mirror images of each other. Diastereomers have different physical properties such as melting points, boiling points, solubilities in a given solvent, densities, refractive indices, etc. Diastereomers can usually be readily separated from each other by conventional methods, such as fractional distillation, fractional crystallization, or chromatography, including HPLC.

Enantiomers, however, present special challenges because their physical properties are identical. They generally cannot be separated by conventional methods, especially if they are in the form of a racemic mixture. Thus, they cannot be separated by fractional distillation because their boiling points are identical and they cannot be separated by fractional crystallization because their solubilites are identical (unless the solvent is optically active). They also cannot be separated by conventional chromatography such as HPLC because (unless the adsorbent is optically active) they are held equally onto the adsorbent. HPLC methods employing chiral stationary phases are a very common approach to the separation of enantiomers. To be able to separate racemic mixtures of stereoisomers, the chiral phase has to form a diastereomeric complex with one of the isomers, or has to have some other type of stereospecific interaction. The exact mechanism of chiral recognition is not yet completely understood. In reversed-phase HPLC a common type of chiral bonded phase is chiral cavity phases.

The ability to be able to separate diastereomers and enantiomers by HPLC is a useful ability in evaluating the success of synthetic schemes. It is often desirable to separate stereoisomers as a means of evaluating the enantiomeric purity of production samples.

### SUMMARY OF THE INVENTION

The present invention is directed to a Mn-pentaazacyclopentadecane complex. The complex is defined in claim 1.

### BRIEF DESCRIPTION OF THE DRAWINGS

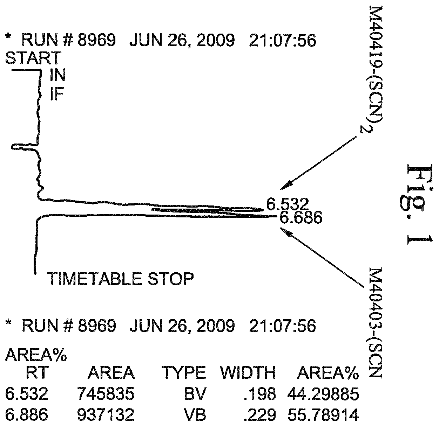

Fig. 1 shows the Chiral HPLC profiles of the M40403 and M40419 bis(thiocyanato) enantiomers.

### DETAILED DESCRIPTION OF THE INVENTION

The formation of the single species of various metal complexes is shown in Scheme 2. The formation of a single species of the metal complex(es) present allows the metal complexes to be reliably detected by a detector without interference from other species of complexes. The peaks on a chromatogram resulting from this detection are sharper and more resolved than those of a chromatogram resulting from a chromatography method in which a traditional mobile phase is employed, as demonstrated in Examples 1 (traditional mobile phase) and 2 (mobile phase containing excess of salt of a coordinating anion).

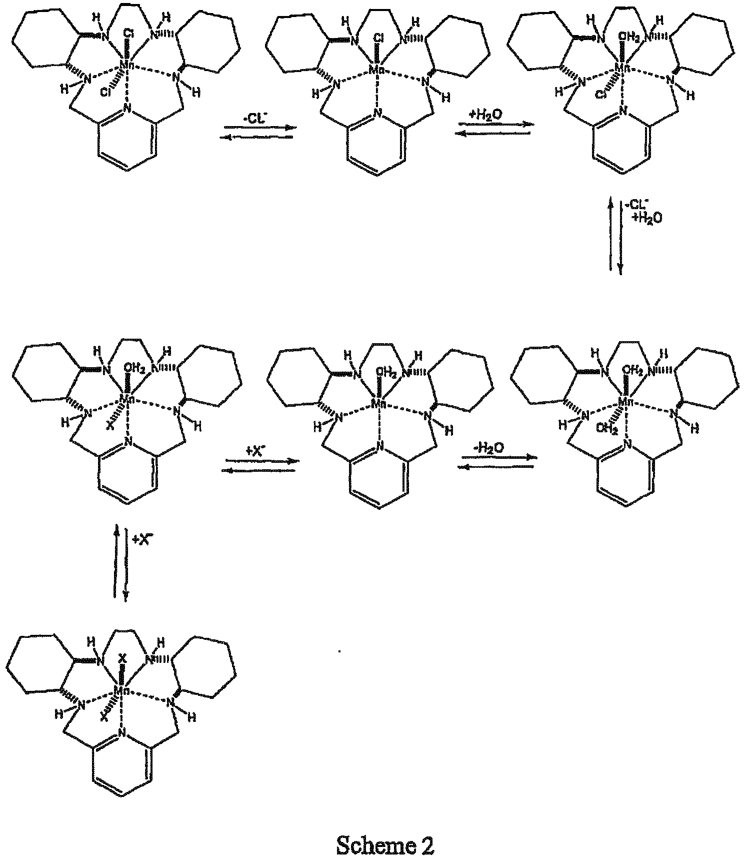

Examples of such superoxide dismutase mimetic compounds include, but are not limited to, the following complexes of the metals Mn and Fe. Iron based superoxide dismutase mimetics include, but are not limited to, Fe^{III}(salen) complexes, Fe^{III}(1,4,7,10,13-pentaazacyclopentadecene) derivatives and Fe^{III}(porphyrinato) complexes. Manganese based superoxide dismutase mimetic compounds include, but are not limited to, metal complexes containing manganese(II) or manganese(III). Examples of manganese based superoxide dismutase mimetic compounds include Mn^{III}(porphyrinato) complexes, Mn^{III}(salen) complexes, and Mn^{II}(1,4,7,10,13-pentaazacyclopentadecane) derivatives. Examples of Mn^{II}(1,4,7,10,13-pentaazacyclopentadecane) derivatives include M40403 and M40401, as shown in Scheme 3 below. Diastereomers of the same metal complexes can also be detected and separated by HPLC. As it is often desirable to separate stereoisomers as a means of evaluating the chemical and optical purity of production samples, the metal complexes can also comprise products of a reaction stream.

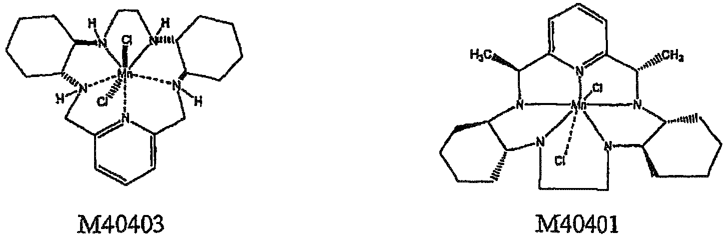

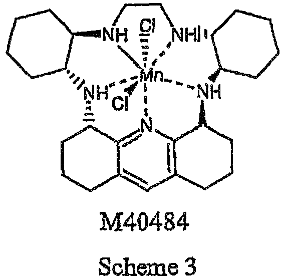

The ligand is a coordinating anion that binds to the metal cation of the metal complex. The coordinating anion can serve as an axial ligand for a superoxide dismutase mimetic compound. Examples of such anions include chloride anions, thiocyanate anions, stearate anions, acetate anions, trifluoroacetate anions, carboxylate anions, formate anions, or azide anions. Preferred anions include chloride anions, thiocyanate anions, and formate anions. More preferred anions are chloride anions. Even more preferred anions are thiocyanate anions. When present in an excess, the thiocyanate anions bind to the coordinating metal of the complexes preferentially to the chloride anions. An excess of thiocyanate anions will produce the bis(thiocyanato) complexes of M40403 and M40419 as shown in Scheme 4.

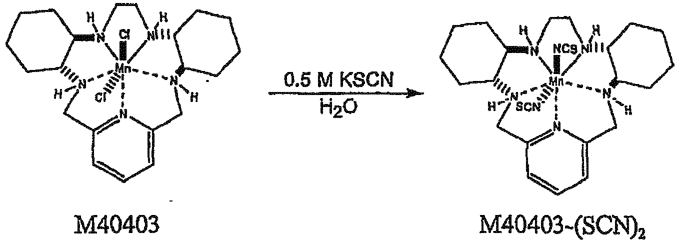

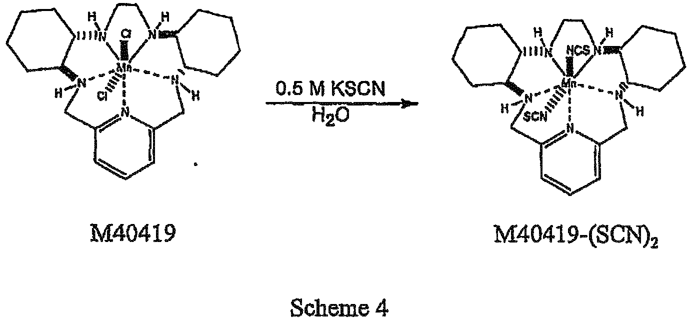

An example of the use of the acetate anion as the coordinating anion with M40403 is shown in Scheme 5 below. Scheme 6 illustrates the use of the formate anion as the coordinating anion with M40403.

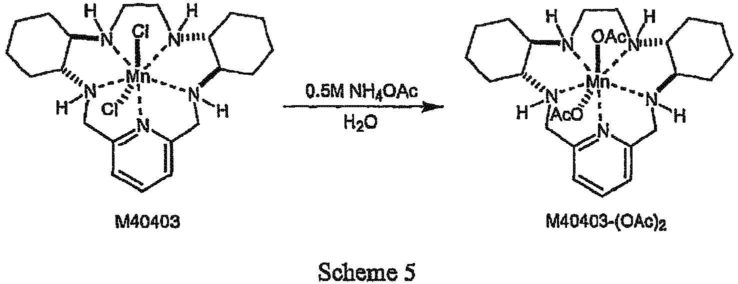

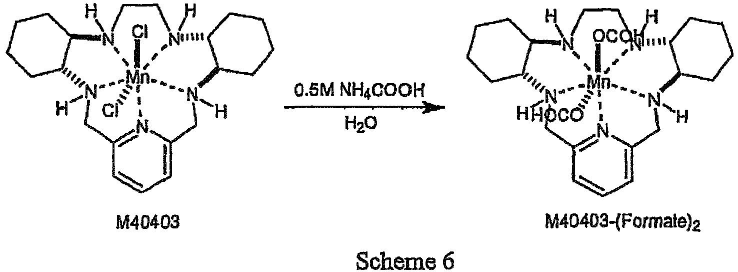

The coordinating anion is supplied by a salt of the coordinating anion. Salts of the chloride anion include, but are not limited to, sodium chloride, lithium chloride, potassium chloride, ammonium chloride, or tetraalkylammonium chloride. Preferred salts of the chloride anion include sodium chloride, lithium chloride and tetrabutylammonium chloride. Salts of the thiocyanate anion include, but are not limited to, sodium thiocyanate, potassium thiocyanate, ammonium thiocyanate, or lithium thiocyanate. Preferred salts of the thiocyanate anion include sodium thiocyanate and potassium thiocyanate. Salts of the acetate anion include, but are not limited to, potassium acetate, sodium acetate, ammonium acetate, ammonium trifluoroacetate and lithium acetate. Preferred salts of the acetate anion include ammonium acetate. Salts of the formate anion include, but are not limited to, potassium formate, sodium formate, ammonium formate and lithium formate. Preferred salts of the formate anion include ammonium formate. Salts of the cyanate anion include but are not limited to, sodium cyanate, potassium cyanate, or ammonium cyanate. Salts of the carboxylate anion include, but are not limited to, potassium carboxylate, ammonium carboxylate and sodium carboxylate. Salts of the stearate anion include, but are not limited to, lithium stearate and sodium stearate. Salts of the azide anion include, but are not limited to, sodium azide, potassium azide, and lithium azide.

### Example

A chiral HPLC method was used to separate the all-R and all-S enantiomers M40403 and M40419:

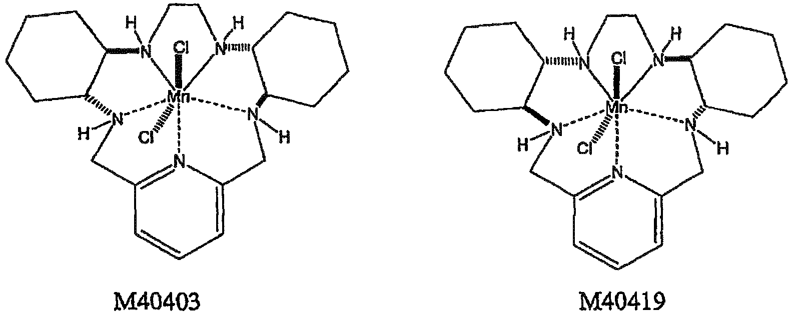

The complexes were first converted to their corresponding bis(thiocyanato) forms via ligand exchange reactions with KSCN, as shown in Scheme 7 The resultant M40403 and M40419 (SCN)₂ derivatives were then separated via chiral HPLC.

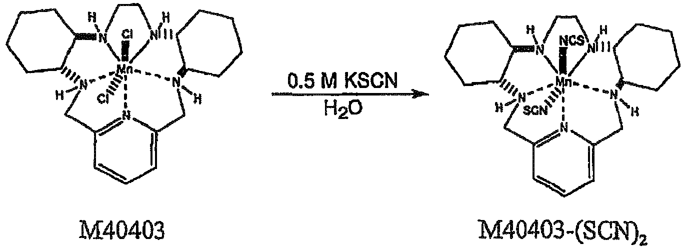

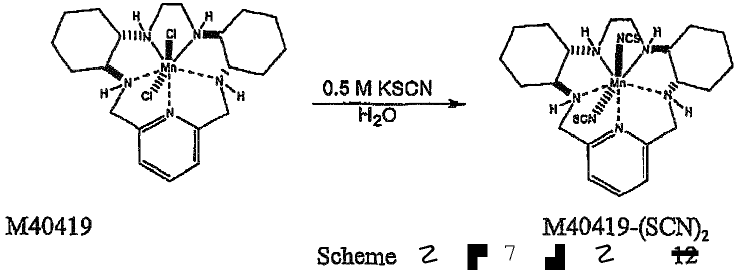

### Chemicals, Materials, and Methods

### Preparation of Bis(thiocyanato) Complexes of M40403 and M40419, respectively

M40403 (SCN)₂: The M40403 complex (5.0 mg, 0.01 mmol) was dissolved in 1.0 mL H₂O. To this solution was added KSCN (49.0 mg, 0.5 mmol) to bring its concentration to 0.5 M. A white precipitate formed immediately upon addition of the KSCN. The reaction was mixed vigorously for 60 minutes at room temperature, and the resulting suspension was extracted with CH₂Cl₂ (3 × 1.0 mL). The combined CH₂Cl₂ extracts were then dried over MgSO₄, filtered, and evaporated to yield the product as a white solid. The product was dissolved in MeOH (2.5 mL), and aliquots of the MeOH solution were mixed in a 1:1 ratio with the HPLC mobile phase (0.26 M NH₄SCN in MeOH) prior to injection.

M40419 (SCN)₂: The M40419 complex (5.0 mg, 0.01 mmol) was dissolved in 1.0 mL H₂O. To this solution was added KSCN (49.0 mg, 0.5 mmol) to bring its concentration to 0.5 M. A white precipitate formed immediately upon addition of the KSCN. The reaction was mixed vigorously for 60 minutes at room temperature, and the resulting suspension was extracted with CH₂Cl₂ (3 × 1.0 mL). The combined CH₂Cl₂ extracts were then dried over MgSO₄, filtered, and evaporated to yield the product as a white solid. The product was dissolved in MeOH (2.5 mL), and aliquots of the MeOH solution were mixed in a 1:1 ratio with the HPLC mobile phase (0.26 M NH₄SCN in MeOH) prior to injection.

### Preparation of Standard Solutions

The HPLC mobile phase was a 0.2 M solution of NH₄SCN in MeOH, prepared by adding 2.0 g NH₄SCN to 100 mL MeOH (HPLC grade). The mobile phase solution was filtered through a 0.45 µm nylon filter (Osmonics) prior to use.

### Chromatographic Conditions

The column used for the chiral HPLC experiment was the Chiralcel OD-RH column, 4.6 mm × 150 mm, 5 µm particle size (Chiral Technologies). Separations were achieved using a simple isocratic flow at a rate of 0.5 mL/min. The wavelength for detection was 265 nm, and the injection volume of each sample was 20 µL.

The chiral HPLC profiles of the M40403 and M40419 bis(thiocyanato) enantiomers are shown in figure 1. The chiral HPLC profiles for the M4043-(SCN)₂ and M40419(SCN)₂ enantiomers are shown separately in Profiles A and B. As revealed in the profiles, the all-R M40403-(SCN)₂ enantiomer has a retention time (t_{R}) of 6.8 min, while its all-S M40419-(SCN)₂ mirror-image has a retention time of 6.5 minutes. The enantiomers were then analyzed by co-injection experiment to confirm that they are truly resolved under these chromatographic conditions. The resulting HPLC profile for the co-injected enantiomers is shown in Profile C. The enantiomers were separated by approximately 0.3 minutes, thereby confirming the initial results.

## Claims

1. A complex having the structure: 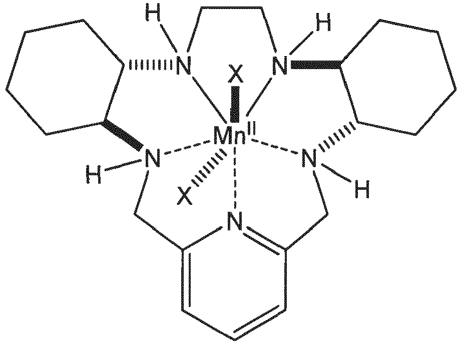 wherein X is a coordinating anion selected from the group consisting of chloride anions, thiocyanate anions, stearate anions, acetate anions, trifluoroacetate anions, carboxylate anions, formate anions and azide anions.

2. The complex of claim 1 wherein X is a chloride anion, a thiocyanate anion, or a formate anion.

3. The complex of claim 1 wherein X is a chloride anion or a thiocyanate anion.

4. A complex according to claim 1 having the structure:

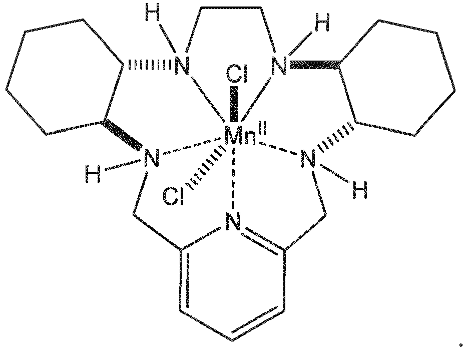

5. A complex according to Claim 1 having the structure:

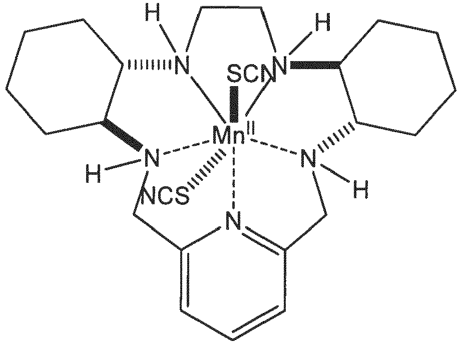

6. A composition consisting of an HPLC chromatographic eluent and the single species of the Mn^{II}(1,4,7,10,13-pentaazacyclopentadecane) complex having a structure according to claim 1.

7. The composition of claim 6 wherein X is a chloride anion, a thiocyanate anion, or a formate anion.

8. The composition of claim 6 wherein X is a chloride anion or a thiocyanate anion.

9. The composition of claim 6 wherein the Mn^{II}(1,4,7,10,13-pentaazacyclopentadecane) complex has the formula:

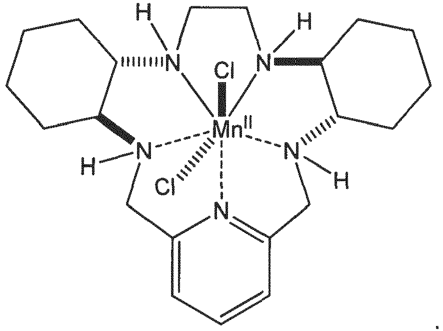

10. The composition of claim 6 wherein the Mn^{II}(1,4,7,10,13-pentaazacyclopentadecane) complex has the formula:

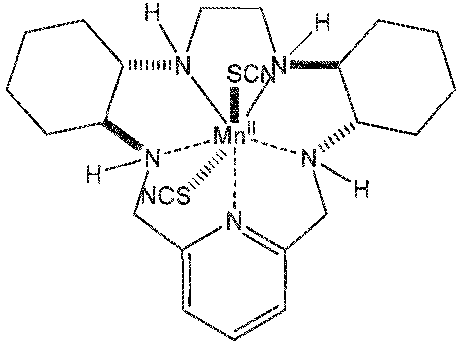

## Patentansprüche

1. Komplex, der die folgende Struktur aufweist: 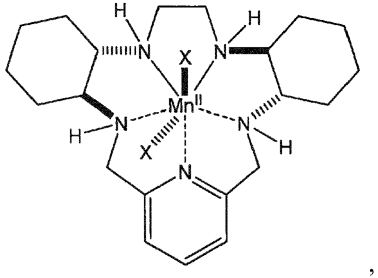 wobei X ein koordinierendes Anion ist, das aus der Gruppe ausgewählt ist, die aus folgenden besteht: Chloridanionen, Thiocyanatanionen, Stearatanionen, Acetatanionen, Trifluoracetatanionen, Carboxylatanionen, Formiatanionen und Azidanionen.

2. Komplex nach Anspruch 1, wobei X ein Chloridanion, ein Thiocyanatanion oder ein Formiatanion ist.

3. Komplex nach Anspruch 1, wobei X ein Chloridanion oder ein Thiocyanatanion ist.

4. Komplex nach Anspruch 1, der die folgende Struktur aufweist:

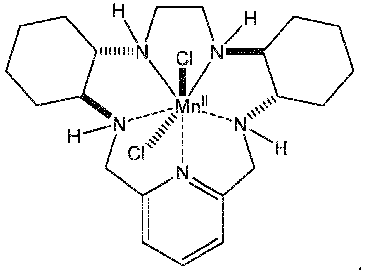

5. Komplex nach Anspruch 1, der die folgende Struktur aufweist:

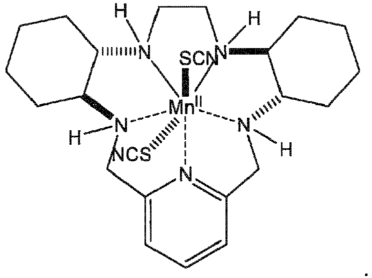

6. Zusammensetzung bestehend aus ein HPLC-chromatographischer Eluent und die einzige Spezies Mn^{II}-(1,4,7,10,13-pentaazacyclopentadecan)-Komplexes mit einer Struktur nach Anspruch 1.

7. Zusammensetzung nach Anspruch 6, wobei X ein Chloridanion, ein Thiocyanatanion oder ein Formiatanion ist.

8. Zusammensetzung nach Anspruch 6, wobei X ein Chloridanion oder ein Thiocyanatanion ist.

9. Zusammensetzung nach Anspruch 6, wobei der Mn^{II}-(1,4,7,10,13-pentaazacyclopentadecan)-Komplex die folgende Formel aufweist:

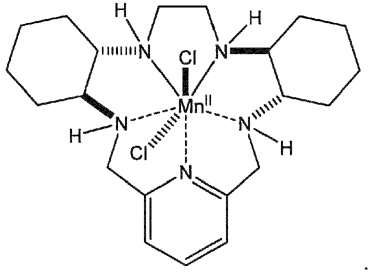

10. Zusammensetzung nach Anspruch 6, wobei der Mn^{II}-(1,4,7,10,13-pentaazacyclopentadecan)-Komplex die folgende Formel aufweist:

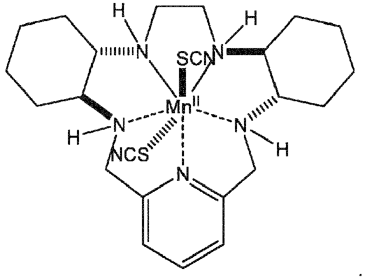

## Revendications

1. Complexe répondant à la structure: 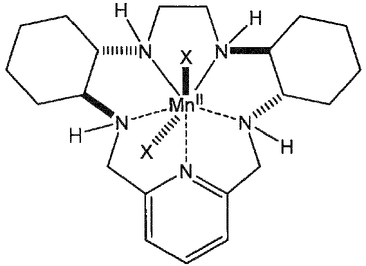 dans lequel X est un anion de coordination choisi dans le groupe constitué par les anions chlorure, les anions thiocyanate, les anions stéarate, les anions acétate, les anions trifluoroacétate, les anions carboxylate, les anions formiate et les anions azoture.

2. Complexe selon la revendication 1, dans lequel X est un anion chlorure, un anion thiocyanate ou un anion formiate.

3. Complexe selon la revendication 1, dans lequel X est un anion chlorure ou un anion thiocyanate.

4. Complexe selon la revendication 1 répondant à la structure:

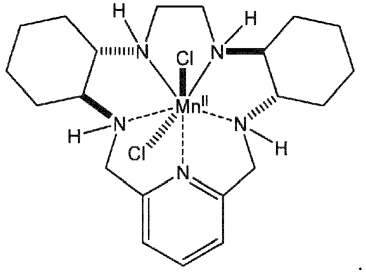

5. Complexe selon la revendication 1 répondant à la structure:

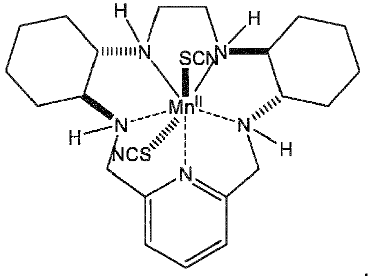

6. Composition consistant en un éluant de chromatographie HPLC et une espèce unique d'un complexe répondant à la structure selon la revendication 1.

7. Composition selon la revendication 6, dans laquelle X est un anion chlorure, un anion thiocyanate ou un anion formiate.

8. Composition selon la revendication 6, dans laquelle X est un anion chlorure ou un anion thiocyanate.

9. Composition selon la revendication 6, dans laquelle le complexe de Mn^{II}(1,4,7,10,13-pentaazacyclopentadécane) répond à la formule:

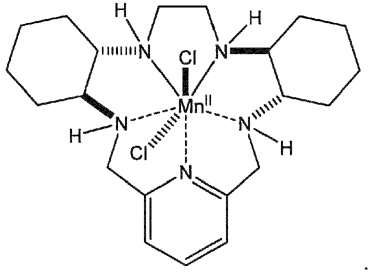

10. Composition selon la revendication 6, dans laquelle le complexe de Mn^{II}(1,4,7,10,13-pentaazacyclopentadécane) répond à la formule:
